# FASCICULE DE BREVET EUROPEEN

(11) **EP 2 810 436 B1**
(45) Date de publication et mention de la délivrance du brevet: **17.07.2019**
(21) Numéro de dépôt: 13704209.9
(22) Date de dépôt: 25.01.2013
(51) Int. Cl.: H04N 19/103, H04N 19/157, H04N 19/196, H04N 19/44, H04N 19/51, H04N 19/52, H04N 19/597

(54) **CODAGE ET DECODAGE PAR HERITAGE PROGRESSIF**
CODIERUNG UND DECODIERUNG DURCH SELEKTIVE VERERBUNG
ENCODING AND DECODING BY MEANS OF SELECTIVE INHERITANCE

(30) Priorité: 30.01.2012 FR 1250866
(43) Date de publication de la demande: 10.12.2014
(73) Titulaire: Orange, 75015 Paris (FR)
(72) Inventeur: JUNG, Joël, F-78320 Le Mesnil Saint Denis (FR); MORA, Elie Gabriel, F-75014 Paris (FR)
(74) Mandataire: Cabinet Plasseraud
(86) Numéro de dépôt international: PCT/FR2013/050160
(87) Numéro de publication internationale: WO 2013/114028

(56) Documents cités:
- HEIKO SCHWARZ ET AL: "Description of 3D Video Coding Technology Proposal by Fraunhofer HHI (HEVC compatible, configuration A)", 98. MPEG MEETING; 28-11-2011 - 2-12-2011; GENEVA; (MOTION PICTURE EXPERT GROUP OR ISO/IEC JTC1/SC29/WG11),, no. m22570, 22 novembre 2011 (2011-11-22), XP030051133, cité dans la demande
- HEIKO SCHWARZ ET AL: "Description of 3D Video Coding Technology Proposal by Fraunhofer HHI (HEVC compatible, configuration B)", 98. MPEG MEETING; 28-11-2011 - 2-12-2011; GENEVA; (MOTION PICTURE EXPERT GROUP OR ISO/IEC JTC1/SC29/WG11),, no. m22571, 22 novembre 2011 (2011-11-22), XP030051134,
- GUN BANG ET AL: "Description of 3D video coding technology proposal by ETRI and Kwangwoon University", 98. MPEG MEETING; 28-11-2011 - 2-12-2011; GENEVA; (MOTION PICTURE EXPERT GROUP OR ISO/IEC JTC1/SC29/WG11),, no. m22625, 27 novembre 2011 (2011-11-27), XP030051188, cité dans la demande
- NICO CORDES AND GERARD DE HAAN: "Y/C separation of composite color video signals using samples with non-opposite subcarrier phases", VISUAL COMMUNICATIONS AND IMAGE PROCESSING; 20-1-2004 - 20-1-2004; SAN JOSE,, 20 January 2004 (2004-01-20), XP030081336,

## Description

La présente invention concerne le domaine du codage et du décodage de signaux et en particulier le codage/décodage de signaux vidéo.

Elle concerne en particulier, mais non exclusivement, des applications de vidéo 3D qui mettent en oeuvre un codage/décodage d'images issues de différentes caméras. La présente application s'applique de manière similaire au codage/décodage d'images fixes.

Une représentation 3D d'une vidéo peut être obtenue par multiplexage de deux vues d'une même scène (format stéréo), enregistrées par deux caméras différentes d'un unique dispositif stéréoscopique.

Deux types de codage MFC et MVC (pour « Multiview Frame-compatible Coding » et « Multiview Video Coding » en anglais) sont généralement utilisés pour coder des images issues de deux vues en exploitant des redondances existant entre les deux vues.

Bien que le format de codage stéréo domine le marché actuellement, le développement de nouveaux services de vidéo 3D tels que 3DTV (pour « 3D Télévision » en anglais) ou FTV (pour « Free Viewpoint Télévision » en anglais) nécessitent une représentation fluidifiée de scènes tridimensionnelles, qui peut être obtenue en multiplexant simultanément plus de deux vues sur un dispositif 3D. A cet effet, au moins trois vidéos issues de différents points de vue peuvent être acquises, encodées puis transmises selon le format MVV (pour « MultiView Video » en anglais) et le codage MVC peut être utilisé afin de coder ces vidéos. Cependant, le coût associé au codage MVC est élevé, particulièrement lorsque le nombre de points de vue est grand.

Un nouveau format de codage vidéo, appelé MVD (pour « Multiview Video + Depth » en anglais) fait l'objet de développements actuels. Selon ce format, des caméras de profondeur sont utilisées en plus de caméras de texture. Chaque vidéo de texture est associée à une vidéo de profondeur. Après codage et transmission, les vidéos de texture et de profondeur reconstruites peuvent être transmises à un synthétiseur qui génère un nombre requis de vues intermédiaires. L'avantage associé aux images de profondeur des vidéos de profondeur est qu'elles sont uniquement composées d'un canal de luminance et qu'elles sont principalement composées de régions lisses séparées par des bordures. Ainsi, elles sont moins coûteuses à coder que les images de texture issues des vidéos de texture. De plus, des corrélations inter-vues (entre deux images de texture, ou entre deux images de profondeur) ainsi que des corrélations inter-composantes (entre une image de texture et une image de profondeur) peuvent être exploitées selon le format MVD, par exemple au moyen d'un codec 3DVC (pour « 3D Video Coding » en anglais), afin d'améliorer l'efficacité du codage.

Afin d'améliorer l'efficacité du codage, des standards prévoient une prédiction d'informations de codage pour un bloc courant, en fonction d'informations de codage de blocs précédemment codés, puis décodés.

Ces informations de codage peuvent par exemple être un vecteur de mouvement. Ainsi, le standard AMVP (pour « Advanced Motion Vector Prédiction » en anglais) introduit une liste de prédicteurs pour le vecteur de mouvement du bloc courant. Seuls la différence entre le vecteur de mouvement du bloc courant en cours de codage et le meilleur prédicteur (au sens d'un critère de débit-distorsion), et un index signalant le meilleur prédicteur qui a été déterminé parmi la liste de prédicteurs, sont transmis au décodeur, réduisant ainsi le coût de transmission des informations liées au vecteur de mouvement du bloc courant. La prédiction est également utilisée pour réduire le coût de transmission d'informations de codage relatives à un mode de codage en Intra. Le codage en Intra consiste à coder un bloc d'une image en fonction d'un ou plusieurs blocs codés puis décodés de cette même image. A cet effet, plusieurs modes Intra sont définis, chaque mode Intra correspondant généralement à une direction de prédiction. Certains modes Intra consistent également en des calculs de moyennes effectués sur des blocs voisins du bloc courant. Ces modes Intra, bien connus de l'Homme du métier, ne sont pas décrits plus en détails dans la présente demande.

Ainsi, selon le codage Intra, un « mode le plus probable », appelé MPM par la suite, pour « Most Probable Mode » en anglais, est déduit pour un bloc d'une image, à partir des modes Intra des blocs voisins de la même image. Le MPM sert alors de prédicteur pour coder le mode Intra sélectionné pour coder le bloc courant.

L'héritage d'informations est également utilisé afin d'améliorer l'efficacité du codage. Selon le codage HEVC (pour « High Efficiency Video Coding » en anglais), une fonctionnalité de fusion « Merge » (ou mode « Merge ») permet au bloc courant d'hériter directement du vecteur de mouvement et de l'index de l'image de référence d'un bloc voisin ou d'un bloc correspondant dans une image précédente (au sens temporel). Le vecteur de mouvement hérité ne nécessite alors pas d'être codé dans la mesure où le même principe peut être appliqué lors du décodage. Cependant, l'application de la fonctionnalité « Merge » dépend d'un choix de débit-distorsion du codeur et ce choix requiert donc une signalisation, afin d'informer le décodeur sur le fait que le mode « Merge » a été utilisé au codage. A cet effet, la signalisation est mise en oeuvre au moyen d'un drapeau « Merge » dans la transmission des données au décodeur.

Tandis que le résidu entre le bloc courant et le bloc prédit utilisant le vecteur de mouvement hérité est déterminé et transmis dans le mode « Merge », un mode « Skip » propose de ne pas transmettre ce résidu : les échantillons reconstruits au décodeur sont eux-mêmes hérités du bloc pointé par le vecteur de mouvement hérité. Le mode « Skip » permet ainsi de supprimer le codage du résiduel, mais son utilisation doit tout de même être signalée au décodeur.

En réponse aux besoins du standard MPEG pour le codage vidéo 3D (3DV, pour « 3D Video Coding » en anglais), des techniques employant à la fois la prédiction et l'héritage direct ont été proposées.

A cet effet, le document « Description of 3D Video Coding Technology Proposai by Fraunhofer HHI (HEVC compatible, configuration A) », H. Schwarz et al, m22570, Novembre 2011, propose d'ajouter systématiquement un prédicteur supplémentaire dans la liste de prédicteurs du standard AMVP. Le prédicteur supplémentaire est le vecteur de mouvement du bloc correspondant au bloc courant dans une vue adjacente (prédiction inter-vues). Une prédiction inter-vues du résiduel a également été introduite, selon laquelle le résiduel du bloc correspondant au bloc courant dans la vue adjacente est utilisé pour prédire le résiduel du bloc courant.

En outre, le document « Description of 3D video coding technology proposai by ETRI and Kwangwoon University », G. Bang et al, m22625, Novembre 2011, introduit un outil de prédiction supplémentaire, selon lequel le mode Intra choisi pour un bloc de référence dans une image de texture correspondant à un bloc courant à coder dans l'image de profondeur associée (prédiction inter-composantes), est ajouté dans une liste de prédicteurs prédéterminée afin de sélectionner le MPM pour le bloc courant à coder en Intra dans l'image de profondeur. Autrement dit, le bloc courant ainsi codé hérite indirectement du mode Intra choisi pour le bloc de référence.

L'héritage indirect a été utilisé dans le document « Description of 3D Video Coding Technology Proposai by Fraunhofer HHI (HEVC compatible, configuration A) », H. Schwarz et al, qui a introduit un outil d'héritage de paramètre de mouvement (« Motion Parameter Inheritance »), selon lequel la structure de partitionnement entière et les vecteurs de mouvement utilisés pour un bloc de l'image de texture correspondant au bloc courant de l'image de profondeur, est utilisé pour le bloc courant de l'image de profondeur. Cependant, l'héritage doit également être signalé au décodeur, pour permettre le décodage des données transmises.

Ainsi, quels que soient le standard et le type de codage employés, la mise en oeuvre de l'héritage est conditionnée par l'évaluation de contraintes de débit-distorsion. Par conséquent, le mode de codage choisi en utilisant l'héritage, lorsqu'il est utilisé au codage pour un bloc courant, doit être signalé au décodeur, afin que ce dernier connaisse les choix qui ont été faits au codage.

Ainsi, il existe un besoin d'améliorer l'efficacité des techniques de codage/décodage de signaux utilisant l'héritage d'informations de codage/décodage.

La présente invention vient améliorer la situation. L'invention est définie par les revendications annexées; les exemples appelés "aspects de l'invention" sont des exemples illustratifs.

Un premier aspect de l'invention concerne à cet effet un procédé de codage d'au moins un bloc courant d'une première image par rapport à un bloc de référence d'une deuxième image comportant au moins un élément commun avec la première image, le bloc de référence ayant été au préalable codé puis décodé.

Le procédé comprend les étapes consistant à:
- filtrer ledit bloc de référence décodé,
- estimer, uniquement sur la base du bloc de référence décodé filtré, au moins une valeur d'une caractéristique locale du bloc de référence décodé filtré,
- déterminer, en fonction de la valeur estimée de caractéristique locale :
   ▪ un ensemble d'informations de codage à utiliser pour coder le bloc courant,
   ▪ une méthode de codage du bloc courant,
- en fonction de la valeur estimée de caractéristique locale, coder le bloc courant en fonction de l'ensemble d'informations de codage déterminé et selon la méthode de codage déterminée.

Un deuxième aspect de l'invention concerne un procédé de décodage d'au moins un bloc courant codé d'une première image par rapport à un bloc de référence d'une deuxième image comportant au moins un élément commun avec la première image, le bloc de référence ayant été au préalable décodé.

Le procédé comprend les étapes consistant à :
- filtrer ledit bloc de référence décodé,
- estimer, uniquement sur la base du bloc de référence décodé filtré, au moins une valeur d'une caractéristique locale du bloc de référence décodé filtré ;
- déterminer, en fonction de la valeur estimée de caractéristique locale :
   ▪ un ensemble d'informations de décodage à utiliser pour décoder le bloc courant,
   ▪ une méthode de décodage du bloc courant,
- en fonction de la valeur estimée de caractéristique locale, décoder le bloc courant en fonction de l'ensemble d'informations de décodage déterminé et selon la méthode de décodage déterminée.

La présente invention permet ainsi avantageusement de coder/décoder un bloc courant par héritage d'informations de codage/décodage qui sont déterminées suite à une analyse uniquement des caractéristiques locales d'un bloc de référence décodé filtré. De façon générale, on entend par caractéristique locale toute information relative à la nature pixellique du bloc de référence, telle qu'obtenue après filtrage de ce dernier. De telles caractéristiques locales comprennent par exemple :
- une direction principale dans le bloc de référence décodé filtré, un angle principal ou une orientation principale du bloc de référence décodé filtré, et/ou
- une amplitude / force de la direction principale, et/ou
- une information de moyenne d'intensité du bloc de référence décodé filtré, et/ou
- une information de moyenne de chrominance ou de luminance du bloc de référence décodé filtré, et/ou
- une information de distorsion moyenne du bloc de référence décodé filtré,
- etc.

Compte tenu du fait que les première et deuxième images contiennent un élément commun, tel qu'une même scène représentée à la fois dans la première et dans la deuxième image, l'estimation de la valeur d'une caractéristique locale dans le bloc de référence décodé filtré permet de déduire avantageusement le niveau de corrélation, faible ou élevé, entre la deuxième image et la première image.

Ainsi, la fiabilité faible ou élevée de l'héritage des informations de codage/décodage est conditionnée respectivement par la valeur faible ou élevée d'une caractéristique locale du bloc de référence décodé filtré. Du fait que la caractéristique locale précitée est calculée uniquement à partir d'un bloc de référence décodé filtré, elle peut également être calculée indépendamment lors du décodage, et le décodage ne nécessite par conséquent pas la réception de bits de signalisation permettant de signaler le type et la valeur d'une telle caractéristique locale.

Le filtrage appliqué au bloc de référence décodé peut par exemple être mis en oeuvre pour détecter les contours présents dans le bloc de référence décodé. Dans ce cas, la valeur de caractéristique locale est alors représentative de l'amplitude et/ou de la direction de tels contours.

Selon des modes de réalisation, le codage ou le décodage du bloc courant selon respectivement la méthode de codage ou de décodage déterminée est :
- direct, selon lequel les informations de codage ou de décodage de l'ensemble déterminé sont utilisées telles quelles pour prédire le bloc courant,
- indirect, selon lequel au codage, les informations de codage de l'ensemble déterminé sont mises en compétition avec des informations de codage prédéterminées, selon un critère de performance de codage, pour sélectionner les informations de codage optimales à utiliser pour prédire le bloc courant, et selon lequel au décodage, les informations de codage optimales sont lues de façon à sélectionner les informations de décodage correspondantes dans l'ensemble d'informations de décodage déterminé, afin de prédire le bloc courant.

Ainsi, l'invention permet de mettre en oeuvre une méthode de codage/décodage par héritage direct ou indirect selon la valeur estimée d'une caractéristique locale d'un bloc de référence décodé filtré.

La méthode d'héritage direct permet d'utiliser directement des informations de codage (respectivement de décodage) de l'image de référence pour le codage (respectivement décodage) du bloc courant. La fiabilité associée au codage (respectivement décodage) du bloc courant est élevée dans la mesure où la valeur estimée de la caractéristique locale du bloc de référence décodé filtré est élevée. De plus, au codage, il n'est pas nécessaire de signaler, pour le décodage, les informations de codage de l'ensemble déterminé. Le coût de la transmission entre le codeur et le décodeur est ainsi réduit.

La méthode d'héritage indirect permet, lorsque la valeur estimée de la caractéristique locale du bloc de référence décodé filtré est moins élevée, d'hériter tout de même des informations de codage (respectivement de décodage) de l'ensemble déterminé utilisées lors du codage (respectivement décodage) du bloc courant. Au codage, les informations de codage de l'ensemble déterminé forment au moins un nouveau prédicteur qui peut alors être mis en compétition avec des prédicteurs prédéterminés afin de sélectionner un prédicteur optimal. Le prédicteur optimal est ensuite transmis au décodeur. Ainsi, lorsqu'un nouveau prédicteur est pertinent, il peut remplacer un prédicteur d'une liste de prédicteurs prédéterminés.

Selon certains modes de réalisation, au codage et au décodage, un premier seuil et un second seuil sont prédéterminés, le premier seuil étant supérieur au second seuil, et :
- si la valeur de caractéristique locale estimée est supérieure au premier seuil, la méthode de codage et de décodage directe est utilisée ;
- si la valeur de caractéristique locale estimée est comprise entre le premier seuil et le second seuil, la méthode de codage et de décodage indirecte est utilisée ;
- sinon, une méthode de codage et de décodage autre que les méthodes directe et indirecte est utilisée.

Ces modes de réalisation permettent ainsi, lorsque la valeur estimée de la caractéristique locale du bloc de référence décodé filtré est faible (inférieure au second seuil), d'éviter de remplacer un prédicteur d'une liste de prédicteurs par le nouveau prédicteur, qui n'est alors pas pertinent. Il est à noter que l'invention n'est pas limitée à l'emploi de deux seuils. En effet, des seuils supplémentaires peuvent être prévus pour être comparés à la valeur estimée de caractéristique locale.

Selon certains modes de réalisation, au codage, les informations de codage comprennent soit au moins un mode de codage, soit au moins un paramètre de codage associé au mode de codage, soit les deux, et au décodage, les informations de décodage comprennent soit au moins un mode de décodage, soit au moins un paramètre de décodage associé au mode de décodage, soit les deux.

On entend par mode de codage/décodage un mode de codage/décodage Intra, un mode de codage/décodage Inter, un mode de codage/décodage Skip, la forme du partitionnement d'un macrobloc, le type de transformée (par exemple une transformée DCT4x4, DCT8x8), des informations de mouvement telles qu'un vecteur de mouvement ou la précision de la résolution d'un vecteur de mouvement, etc. On entend par paramètre associé à un mode de codage/décodage toute information servant de paramètre intrinsèque à un mode de codage (par exemple des valeurs de filtres anti-blocs ou d'atténuation d'effet de blocs (« deblocking filter » en anglais), ou des seuils d'activation ou de désactivation d'outils de codage/décodage, etc).

En variante, au codage et au décodage, des images étant initialement acquises par une pluralité de dispositifs d'acquisition d'images, chaque image représentant une vue donnée, la première image correspond à une vue adjacente de la deuxième image, et le bloc courant et le bloc de référence ont des positions identiques respectivement dans la première image et la deuxième image lorsque la position du bloc courant est corrigée par un vecteur de disparité entre la vue de la première image et la vue de la deuxième image.

Ces réalisations permettent d'améliorer l'efficacité du codage et du décodage dans le cas d'un codage et d'un décodage inter-vues.

Selon une autre variante au codage et au décodage, des images successives étant acquises temporellement par un dispositif d'acquisition d'images, la première image correspond à une image acquise consécutivement à l'acquisition de la deuxième image, et le bloc courant et le bloc de référence représentent une scène commune dans les première et deuxième images respectivement.

Ces réalisations permettent d'améliorer l'efficacité du codage et du décodage dans le cas d'un codage et d'un décodage en Inter.

Selon encore une autre variante au codage et au décodage, des images de texture étant acquises en association avec des images de profondeur, la première image est une image de profondeur et la deuxième image est l'image de texture associée à la première image, et le bloc courant et le bloc de référence ont des positions identiques respectivement dans la première image et dans la deuxième image.

Ces réalisations permettent d'améliorer l'efficacité du codage et du décodage dans le cas d'un codage et d'un décodage vue plus profondeur, par exemple selon le format MVD.

Un troisième aspect de l'invention concerne un programme d'ordinateur comportant des instructions pour la mise en oeuvre du procédé selon le premier aspect de l'invention ou selon le deuxième aspect de l'invention, lorsque ce programme est exécuté par un processeur.

Un quatrième aspect de l'invention concerne un codeur pour le codage d'au moins un bloc courant d'une première image par rapport à un bloc de référence d'une deuxième image comportant au moins un élément commun avec la première image, le bloc de référence ayant été au préalable codé puis décodé.

Le codeur comprend :
- une unité de filtrage du bloc de référence décodé,
- une unité d'estimation d'au moins une valeur d'une caractéristique locale du bloc de référence décodé filtré uniquement sur la base du bloc de référence décodé filtré ;
- une unité de détermination, en fonction de la valeur estimée de caractéristique locale,
   ▪ d'un ensemble d'informations de codage à utiliser pour coder le bloc courant,
   ▪ d'une méthode de codage du bloc courant ; et
- une unité de codage qui, en fonction de la valeur estimée de caractéristique locale, code le bloc courant en fonction de l'ensemble d'informations de codage déterminé et selon la méthode de codage déterminée.

Un cinquième aspect de l'invention concerne un décodeur pour le décodage d'au moins un bloc courant codé d'une première image par rapport à un bloc de référence d'une deuxième image comportant au moins un élément commun avec la première image, le bloc de référence ayant été au préalable décodé.

Le décodeur comprend :
- une unité de filtrage du bloc de référence décodé,
- une unité d'estimation d'au moins une valeur d'une caractéristique locale du bloc de référence décodé filtré, uniquement sur la base du bloc de référence décodé filtré;
- une unité de détermination, en fonction de la valeur estimée de caractéristique locale,
   ▪ d'un ensemble d'informations de décodage à utiliser pour décoder le bloc courant,
   ▪ d'une méthode de décodage du bloc courant ; et
- une unité de décodage qui, en fonction de la valeur estimée de caractéristique locale, décode le bloc courant en fonction de l'ensemble d'informations de décodage déterminé et selon la méthode de décodage déterminée.

Un sixième aspect de l'invention concerne un système comprenant un codeur selon le quatrième aspect de l'invention et un décodeur selon le cinquième aspect de l'invention, le codeur comprenant en outre une unité de transmission pour transmettre au codeur des blocs codés pour un codage par bloc d'images.

D'autres caractéristiques et avantages de l'invention apparaîtront à l'examen de la description détaillée ci-après, et des dessins annexés sur lesquels:
- la figure 1 est un diagramme représentant les principales étapes d'un procédé de codage selon l'invention ;
- la figure 2 est un diagramme représentant les principales étapes d'un procédé de décodage selon l'invention ;
- la figure 3 est un diagramme représentant en détail les étapes du procédé de codage de la figure 1, selon un mode de réalisation particulier ;
- la figure 4 est un diagramme représentant en détail les étapes du procédé de décodage de la figure 2, selon un mode de réalisation particulier ;
- la figure 5 illustre un héritage progressif entre un bloc courant d'une première image et un bloc de référence d'une deuxième image selon un mode de réalisation particulier de l'invention ;
- la figure 6 illustre un héritage progressif entre un bloc courant d'une première image et un bloc de référence d'une deuxième image selon un autre mode de réalisation particulier de l'invention ;
- la figure 7 illustre un système comprenant un codeur et un décodeur selon certains modes de réalisation.

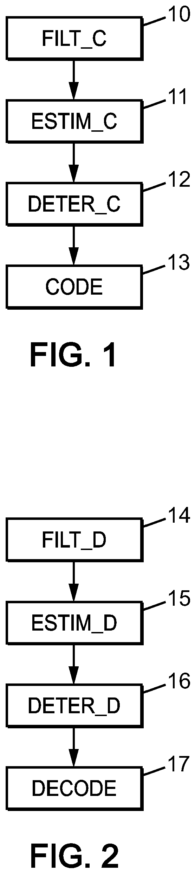

La figure 1 est un diagramme représentant les principales étapes d'un procédé de codage selon l'invention.

Le procédé de codage selon l'invention est appliqué à un bloc courant d'une première image par rapport à un bloc de référence d'une deuxième image comportant au moins un élément commun avec la première image. On entend par bloc de référence un bloc qui a été codé, puis décodé au préalable. Un tel bloc de référence décodé est utilisé pour le codage du bloc courant.

A une étape 10, le bloc de référence décodé est filtré.

Une telle étape est effectuée par exemple à l'aide d'un filtre de détection de contours qui est apte à effectuer une détection de contours dans ledit bloc de référence décodé. Un tel filtre peut être un filtre de Sobel, un filtre de Canny ou tout autre filtre de détection de contours.

A une étape 11, est estimée par calcul au moins une valeur d'une caractéristique locale du bloc de référence décodé filtré, uniquement sur la base du bloc de référence décodé.

Une telle caractéristique locale est par exemple :
- une direction principale dans le bloc de référence décodé filtré, un angle principal ou une orientation principale du bloc de référence décodé filtré, et/ou
- une amplitude / force de la direction principale, et/ou
- une information de moyenne d'intensité du bloc de référence décodé filtré, et/ou
- une information de moyenne de chrominance ou de luminance du bloc de référence décodé filtré, et/ou
- une information de distorsion moyenne du bloc de référence décodé filtré,
- etc.

En fonction de son type, la caractéristique locale peut prendre une ou plusieurs valeurs.

A une étape 12, un ensemble d'informations de codage à utiliser pour coder le bloc courant ainsi qu'une méthode de codage du bloc courant sont déterminés, en fonction de la valeur de caractéristique locale calculée à l'étape 11.

A une étape 13, en fonction de la valeur de caractéristique locale calculée à l'étape 11, le bloc courant est codé en fonction de l'ensemble d'informations de codage déterminé et selon la méthode de codage déterminée.

La figure 2 est un diagramme représentant les principales étapes d'un procédé de décodage selon l'invention.

Des images codées par blocs selon l'invention sont reçues initialement. Le procédé de décodage selon l'invention s'applique à un bloc courant codé d'une première image par rapport à un bloc de référence d'une deuxième image comportant au moins un élément commun avec la première image. Le bloc de référence a été au préalable décodé.

A une étape 14, le bloc de référence décodé est filtré à l'aide d'un filtre qui est le même que celui utilisé au codage. Ainsi, aucune information quant au filtre à utiliser n'est à transmettre entre le codeur et le décodeur.

A une étape 15, est estimée par calcul au moins une valeur d'une caractéristique locale du bloc de référence décodé filtré. Une telle étape est identique à l'étape d'estimation 11 effectuée au codage.

A une étape 16, un ensemble d'informations de décodage à utiliser pour décoder le bloc courant ainsi qu'une méthode de décodage du bloc courant sont déterminés, en fonction de la valeur de caractéristique locale calculée à l'étape 15.

A une étape 16, en fonction de la valeur de caractéristique locale calculée à l'étape 15, le bloc courant est décodé en fonction de l'ensemble d'informations de décodage déterminé et selon la méthode de décodage déterminée.

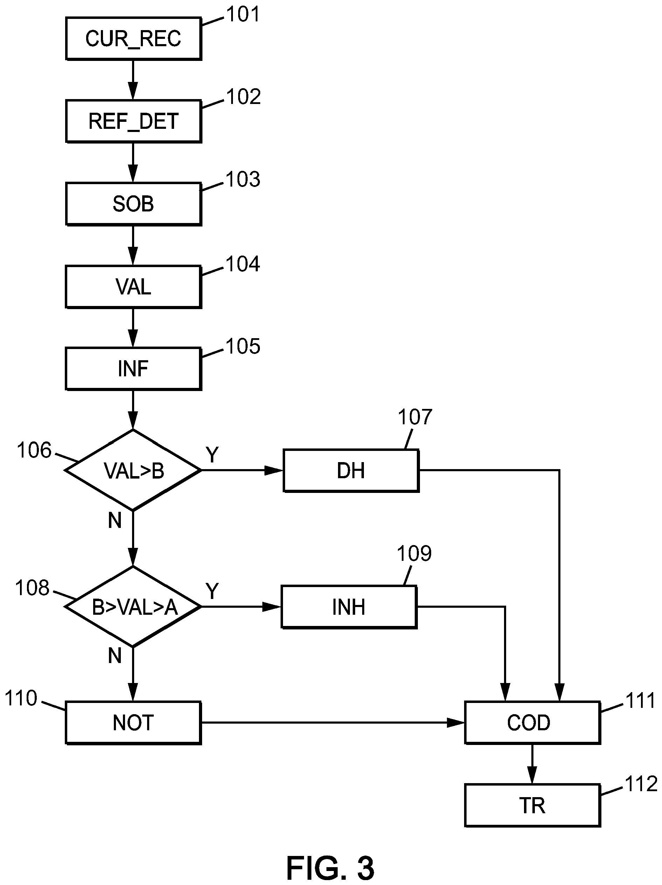

La figure 3 est un diagramme illustrant en détail les étapes du procédé de codage de la figure 1 selon un mode de réalisation particulier de l'invention.

Le procédé de codage s'applique préférentiellement à des images issues d'au moins une séquence vidéo, par exemple de séquences vidéo pouvant comporter des images issues de différentes caméras orientées selon des vues différentes, de séquences vidéo d'images de texture et d'images de profondeur correspondantes, ou d'une séquence vidéo comprenant des images se succédant temporellement (issues d'une même caméra). Dans ce qui suit, les images sont codées par blocs.

A une étape 101, un bloc courant d'une première image est reçu par le codeur pour un codage selon l'invention.

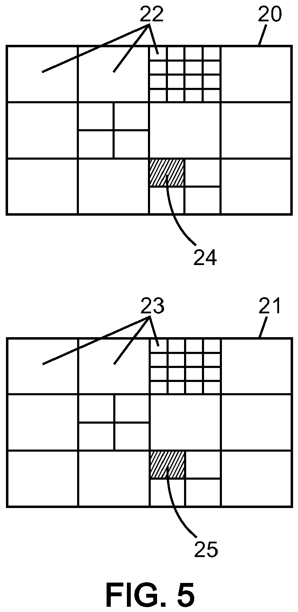

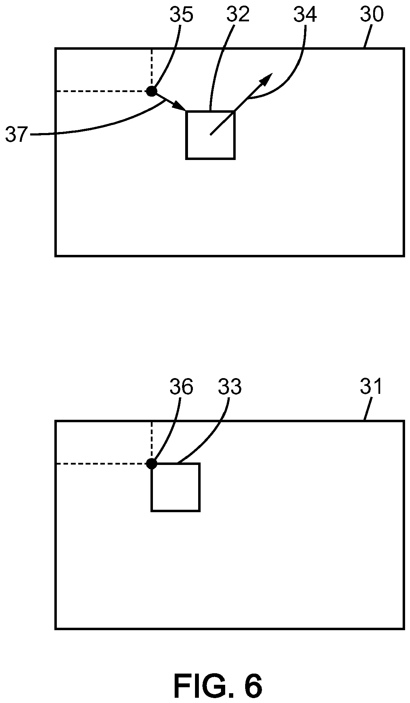

A une étape 102, un bloc de référence d'une deuxième image est déterminé relativement au bloc courant. Selon des modes de réalisations de l'invention :
- la première image et la deuxième image peuvent être une seule et même image, et le bloc de référence est alors un bloc voisin du bloc courant (codage Intra) ;
- la première image représente une vue donnée issue d'un premier dispositif d'acquisition d'images, tel qu'une caméra, et la deuxième image représente une vue adjacente de la vue donnée, issue d'une deuxième caméra. Le bloc courant et le bloc de référence ont alors des positions identiques respectivement dans les première et deuxième images, lorsque la position du bloc courant a été corrigée par un vecteur de disparité entre la vue de la première image et la vue de la deuxième image, comme détaillé en référence à la figure 6 décrite ultérieurement (codage inter-vues) ;
- la première image est une image acquise consécutivement à l'acquisition de la deuxième image, par une unique caméra, et le bloc courant et le bloc de référence représentent alors une scène commune respectivement dans la première image et dans la deuxième image (codage Inter);
- la première image est une image de profondeur acquise par une caméra de profondeur et la deuxième image est une image de texture acquise par une caméra de texture, et le bloc courant et le bloc de référence ont des positions identiques respectivement dans l'image de profondeur et dans l'image de texture, comme détaillé ultérieurement en référence à la figure 5 (codage inter-composantes).

Le bloc de référence est un bloc qui a été codé précédemment, toujours selon l'invention. Durant l'étape 102, le bloc de référence est décodé afin que les étapes suivantes appliquées au codage soient les même que les étapes appliquées au décodage, telles que présentées en référence à la figure 2.

A une étape 103, un filtre est appliqué au bloc de référence décodé. A titre d'exemple, un tel filtre est apte à effectuer une détection de contours dans ledit bloc de référence. Un tel filtre peut être un filtre de Sobel, un filtre de Canny ou tout autre filtre de détection de contours.

A une étape 104, au moins une valeur d'une caractéristique locale du bloc de référence décodé filtré est calculée uniquement sur la base du bloc de référence décodé puis filtré. La valeur de caractéristique locale est par exemple obtenue en déterminant une valeur maximale du gradient de luminance ou de chrominance dans le bloc de référence décodé filtré, une valeur moyenne du gradient de chrominance ou de luminance, un angle principal de la direction de contour, ou un indice représentatif de la distorsion absolue moyenne (MAD pour « Mean Absolute Distortion » en anglais) ou toute combinaison des valeurs précédemment décrites.

A une étape 105, en fonction de la valeur de caractéristique locale calculée à l'étape 104, un ensemble d'informations de codage à utiliser pour coder le bloc courant est déterminé. Les informations de codage peuvent concerner un mode de codage, un ou plusieurs paramètres de codage associé au mode de codage, ou les deux. On entend par mode de codage un mode de codage Intra, un mode de codage Inter, un mode de codage Skip, la forme du partitionnement d'un macrobloc, le type de transformée (par exemple une transformée DCT4x4, DCT8x8), des informations de mouvement telles qu'un vecteur de mouvement ou la précision de la résolution d'un vecteur de mouvement, etc. On entend par paramètre associé à un mode de codage toute information servant de paramètre intrinsèque à un mode de codage (par exemple des valeurs de filtres anti-blocs ou d'atténuation d'effet de blocs, ou des seuils d'activation ou de désactivation d'outils de codage, etc).

On va maintenant décrire lors des étapes suivantes, un mode de réalisation particulier pour déterminer une méthode de codage à partir de la valeur de caractéristique locale calculée à l'étape 104 précitée.

A une étape 106, la valeur de caractéristique locale calculée à l'étape 104 est comparée à un premier seuil B. Ce premier seuil est fixé et il est commun au codage et au décodage. Le même premier seuil B peut par ailleurs être utilisé pour tous les blocs à coder. La valeur du premier seuil B est fixée différemment selon que la valeur de caractéristique locale est une valeur moyenne, une valeur maximale, une MAD ou un angle.

Si la valeur de caractéristique locale est supérieure au premier seuil B, alors il en est déduit à une étape 107 que la corrélation entre le bloc de référence décodé filtré et le bloc courant est forte. Une méthode par héritage direct est alors choisie pour le codage du bloc courant. A cet effet, les informations de codage déterminées à l'étape 105 sont utilisées telles quelles pour effectuer un codage prédictif du bloc courant.

Si la valeur de caractéristique locale calculée à l'étape 104 est inférieure au premier seuil B, ladite valeur est comparée, à une étape 108, à un second seuil A. A nouveau, ce second seuil A est fixé et il est commun au codage et au décodage. Le même second seuil A peut par ailleurs être utilisé pour tous les blocs à coder. La valeur du second seuil A est fixée différemment selon que la valeur de caractéristique locale est une valeur moyenne, une valeur maximale, une MAD ou un angle.

Si la valeur de caractéristique locale calculée est comprise entre le premier seuil B et le second seuil A, les informations de codage déterminées à l'étape 105 sont utilisées pour un codage du bloc courant selon une méthode par héritage indirect. A cet effet, lesdites informations de codage sont ajoutées ou substituées, à une étape 109, à un ensemble de prédicteurs candidats afin d'être mises en compétition pour la détermination, selon un critère de performance de codage (débit-distorsion par exemple), d'informations de codage optimales. Ainsi, dans le cas où l'ensemble d'informations de codage comprend un vecteur de mouvement donné, le vecteur de mouvement donné peut être ajouté à la liste de vecteurs de mouvement candidats pour le bloc courant, par exemple à la liste de candidats AMVP dans la cadre du codage MVC précédemment décrit. Afin de ne pas modifier le nombre de vecteurs de la liste de candidats mis en compétition, le vecteur de mouvement donné peut être substitué à un candidat de la liste. En variante ou en complément, dans le cas où les informations de codage déterminées à l'étape 105 contiennent un mode de codage particulier, telle que par exemple un mode Intra qui n'appartient pas déjà à la liste de modes Intra candidats pour le codage du bloc courant, telle que par exemple la liste de candidats MPM dans le cadre du codage 3DVC précédemment décrit, l'étape 109 précitée peut impliquer l'ajout (ou la substitution) dudit mode Intra particulier à la liste de modes Intra candidats, afin de déterminer un mode Intra optimal.

Si la valeur de caractéristique locale calculée à l'étape 104 est inférieure au second seuil A, alors une méthode de codage autre que les méthodes par héritage direct et par héritage indirect est employée à une étape 110 pour le codage du bloc courant, dans la mesure où la corrélation entre le bloc courant et le bloc de référence décodé filtré est considérée comme trop faible pour utiliser une méthode de codage par héritage. Le bloc courant est par exemple codé de manière classique, à l'aide par exemple d'un vecteur de mouvement déterminé par rapport à un bloc correspondant au bloc courant dans une image précédemment acquise. L'utilisation d'un codage classique dans le cas où la corrélation entre le bloc de référence décodé filtré et le bloc courant est faible permet d'éviter de remplacer une information de codage d'une liste de candidats prédéterminée par une information de codage déterminée à l'étape 105, qui n'est dans ce cas pas pertinente.

Après les étapes 107, 109 ou 110, le bloc courant est codé à une étape 111 en fonction de la méthode de codage déterminée et en fonction des informations de codage déterminées précédemment. Le bloc ainsi codé est transmis à une étape 112, à un décodeur par exemple. Il est à noter que dans le cas d'un mode de codage par héritage indirect (suite à l'étape 109), les informations de codage optimales sont transmises en plus du bloc courant codé au décodeur.

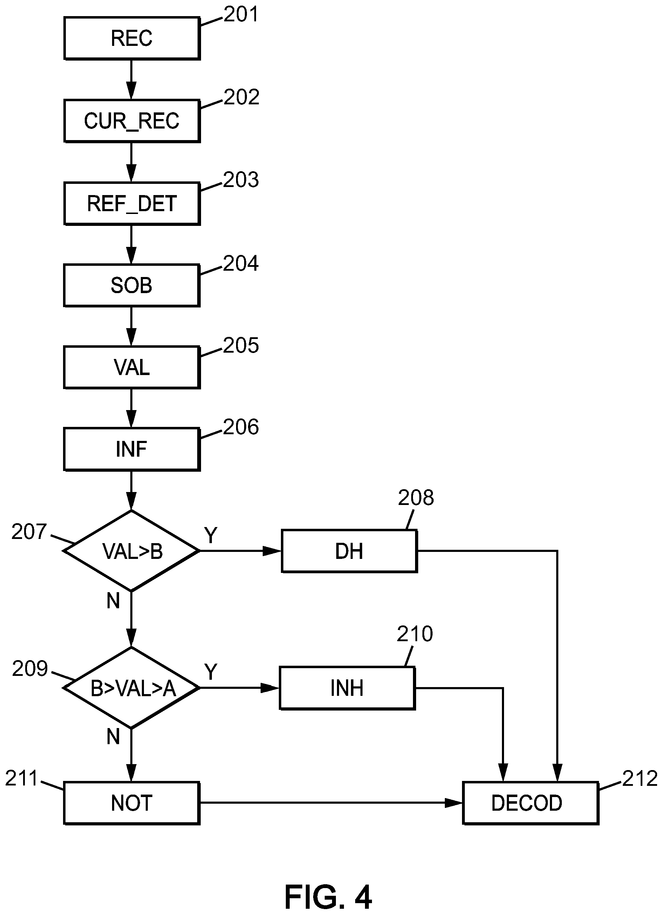

La figure 4 est un diagramme représentant en détail les étapes du procédé de décodage de la figure 2, selon un mode de réalisation particulier de l'invention.

A une étape 201, les blocs codés selon le procédé de codage illustré à la figure 3 sont reçus par un décodeur par exemple. Dans le cas où certains blocs ont été codés selon une méthode par héritage indirect, les informations de codage optimales sont également reçues puis lues à l'étape 201.

A une étape 202, le bloc courant décrit précédemment est reçu.

A une étape 203, le décodeur détermine le bloc de référence à utiliser pour le décodage du bloc courant. La même relation entre le bloc de référence et le bloc courant est utilisée au codage et au décodage (codage Intra, codage Inter, codage inter-vues, ou codage inter-composantes). Ainsi, le même bloc de référence que celui utilisé pour le codage est sélectionné. Au préalable, le bloc de référence a été reçu puis décodé par le décodeur. Le bloc de référence décodé utilisé au codage est donc exactement le même que celui utilisé au décodage, sans que des bits de signalisation n'aient été transmis entre le codeur et le décodeur pour signaler le bloc de référence à utiliser.

A une étape 204, un filtre est appliqué au bloc de référence décodé. Ledit filtre est le même filtre que celui utilisé au codage. Ainsi, aucune information quant au filtre à utiliser n'est à transmettre entre le codeur et le décodeur.

A une étape 205, au moins une valeur d'une caractéristique locale du bloc de référence décodé filtré est calculée uniquement sur la base du bloc de référence décodé puis filtré. La valeur de caractéristique locale calculée au décodage est la même que celle calculée au codage, dans la mesure où le même bloc de référence est considéré au décodage. La valeur de caractéristique locale calculée au décodage est donc soit le MAD, soit l'angle principal, soit la valeur maximale de luminance ou de chrominance du bloc de référence décodé filtré, soit la valeur moyenne de chrominance ou de luminance de ce dernier. La caractéristique locale du bloc de référence décodé filtré à analyser au codage et au décodage est fixée au préalable entre le codeur et le décodeur, afin d'assurer qu'aucun bit de signalisation de cette caractéristique locale ne soit transmis entre le codeur et le décodeur.

A une étape 206, en fonction de la valeur de caractéristique locale calculée à l'étape 205, un ensemble d'informations de décodage à utiliser pour décoder le bloc courant est déterminé. Les informations de décodage peuvent concerner un mode de décodage, un ou plusieurs paramètres de décodage associé au mode de décodage, ou les deux. On entend par mode de décodage un mode de décodage Intra, un mode de décodage Inter, un mode de décodage Skip, la forme du partitionnement d'un macrobloc, le type de transformée (par exemple une transformée DCT4x4, DCT8x8), des informations de mouvement telles qu'un vecteur de mouvement ou la précision de la résolution d'un vecteur de mouvement, etc. On entend par paramètre associé à un mode de décodage toute information servant de paramètre intrinsèque à un mode de décodage (par exemple des valeurs de filtres anti-blocs ou d'atténuation d'effet de blocs (« deblocking filter » en anglais), ou des seuils d'activation ou de désactivation d'outils de décodage, etc).

On va maintenant décrire lors des étapes suivantes, un mode de réalisation particulier pour déterminer une méthode de décodage à partir de la valeur de caractéristique locale calculée à l'étape 205 précitée.

A une étape 207, la valeur de caractéristique locale calculée à l'étape 205 est comparée au premier seuil B, le premier seuil étant commun au codage et au décodage tel que précédemment expliqué.

Si ladite valeur calculée est supérieure au premier seuil, alors il en est déduit à une étape 208 que la corrélation entre le bloc de référence décodé et le bloc courant est forte. Une méthode de décodage par héritage direct est alors choisie pour le décodage du bloc courant. A cet effet, les informations de décodage déterminées à l'étape 206 à partir de la valeur de caractéristique locale calculée à l'étape 205 sont utilisées telles quelles pour effectuer un décodage prédictif du bloc courant.

Si la valeur de caractéristique locale calculée est inférieure au premier seuil B, ladite valeur est comparée, à une étape 209, au second seuil A, le second seuil étant commun au codage et au décodage tel que précédemment expliqué.

Si ladite valeur calculée est comprise entre le premier seuil B et le second seuil A, le décodeur ayant reçu et lu les informations de codage optimales avec le bloc codé lors de l'étape 201, une méthode de décodage par héritage indirect du bloc courant est alors choisie. A cet effet, parmi les informations de décodage déterminées à l'étape 206, celles qui correspondent aux informations de codage optimales sont alors sélectionnées à une étape 210 en tant qu'informations de décodage optimales pour le décodage du bloc courant.

Si ladite valeur calculée est inférieure au second seuil A, alors une méthode de décodage autre que les méthodes de décodage par héritage direct et par héritage indirect est employée à une étape 211 pour le décodage du bloc courant, dans la mesure où la corrélation entre le bloc courant et le bloc de référence décodé filtré est considérée comme trop faible. Le bloc courant est alors décodé de manière classique.

Après l'étape 208, l'étape 210 ou l'étape 211, le bloc courant est décodé à une étape 212 en fonction des informations de décodage déterminées à l'étape 206. Le bloc courant ainsi décodé peut ensuite être utilisé pour des traitements supplémentaires, non concernés par la présente invention.

La présente invention permet donc de mettre en oeuvre un codage et un décodage par héritage progressif c'est-à-dire soit un codage/décodage par héritage direct, soit un codage/décodage par héritage indirect, soit un codage/décodage classique, sur la base d'au moins une valeur d'une caractéristique locale d'un bloc de référence décodé filtré qui est déterminée de la même manière au codage et au décodage. Ainsi, le flux des bits de signalisation entre le codeur et le décodeur est réduit. De plus, l'invention permet d'éviter de remplacer un prédicteur d'une liste de prédicteurs prédéterminée par un nouveau prédicteur, lorsque ce nouveau prédicteur n'est pas pertinent (lorsque la valeur de caractéristique locale est inférieure au second seuil). Un autre avantage de l'invention est qu'elle permet de considérer à la fois des méthodes par héritage direct et par héritage indirect d'informations de codage ou de décodage, pour le codage ou le décodage d'un même bloc.

La figure 5 illustre un codage par héritage progressif d'un bloc courant d'une première image par rapport à un bloc de référence d'une deuxième image selon un mode de réalisation particulier de l'invention.

Selon ce mode de réalisation particulier :
- la première image est une image de profondeur 21 acquise par une caméra de profondeur, cette première image étant l'image courante à coder,
- la deuxième image est une image de texture 20 acquise par une caméra de texture,
- et le bloc courant 25 dans l'image de profondeur 21 a une position identique à celle d'un bloc de référence 24 considéré dans l'image de texture 20.

L'image de texture 20 et l'image de profondeur 21 représentent la même vue. Dans l'exemple représenté, elles ont des structures de partitionnement identiques. Ainsi, l'image de texture 20 comprend un ensemble de blocs 22 et l'image de profondeur 21 comprend un ensemble de blocs 23, qui se correspondent. Cependant, l'invention s'applique de la même manière lorsque la structure de partitionnement de l'image de texture 20 n'est pas la même que celle de l'image de profondeur 21. Par exemple, dans le cas où les structures de partitionnement sont différentes, un bloc de référence décodé peut être déterminé comme étant un bloc compris dans le bloc correspondant au bloc courant, ou en variante, le bloc de référence décodé peut comprendre le bloc correspondant au bloc courant.

Le bloc courant 25 et le bloc de référence 24 occupent donc des positions identiques dans l'image de profondeur 21 et dans l'image de texture 20 respectivement.

On considère que le bloc de référence 24 a déjà été codé, sur la base du mode Intra 1 par exemple. Le bloc de référence 24 est décodé pour le codage ou le décodage du bloc courant.

Selon l'invention, le bloc de référence 24 décodé est ensuite filtré.

En fonction d'au moins une valeur calculée d'une caractéristique locale du bloc de référence décodé filtré, un ou plusieurs modes de codage Intra peuvent être déterminés en tant qu'informations de codage ou de décodage. A cet effet, chaque plage de valeurs de caractéristique locale peut correspondre à un ou plusieurs modes Intra particuliers parmi lesquels peut figurer, à titre de cas particulier, le mode Intra 1 qui a servi à coder le bloc de référence 24. Par exemple, pour une valeur de caractéristique locale comprise entre 1000 et 1500, les deux modes Intra 2 et 9 sont par exemple déterminés. Pour une valeur de caractéristique locale comprise entre 1500 et 4000, un seul mode Intra, par exemple le mode Intra 9, est déterminé. Et pour des valeurs de caractéristique locale supérieures à 4000, un seul mode Intra, par exemple le mode Intra 7, est déterminé. Dans cet exemple, le premier seuil peut être fixé à 4000 et le second seuil peut être fixé à 1000. Cependant, aucune restriction n'est liée au choix des seuils au sens de la présente invention.

Les plages de valeurs et les seuils sont donnés ici à titre illustratif et dépendent des images considérées ainsi que de la caractéristique locale considérée du bloc de référence décodé filtré.

Si la valeur de caractéristique locale est supérieure au premier seuil, un mode de codage par héritage direct est utilisé. Comme la valeur de caractéristique locale est alors supérieure à 4000, le mode Intra 7 (qui correspond à la plage de valeurs supérieures à 4000) est hérité directement pour le codage du bloc courant. Si la valeur de caractéristique locale est comprise entre le premier seuil et le second seuil, un ou plusieurs modes Intra peuvent être ajoutés (ou substitués) à une liste de modes Intra candidats pour le codage et le décodage du bloc courant. Ainsi, si la valeur de caractéristique locale est comprise entre 1000 et 1500, les modes Intra 2 et 9 sont ajoutés (ou substitués) à la liste de modes Intra candidats. Si la valeur de caractéristique locale est comprise entre 1500 et 4000, le mode Intra 9 est ajouté (ou substitué) à la liste de modes Intra candidats. Un mode Intra optimal peut ainsi être déterminé par le codeur, puis transmis au décodeur pour le décodage du bloc courant. Le ou les modes Intra peuvent par exemple être ajoutés à la liste de MPM dans le cadre du codage ou du décodage 3DVC. Si la valeur de caractéristique locale est inférieure au second seuil, le mode Intra pour coder le bloc courant est alors déterminé de manière classique.

Aucune restriction n'est attachée au nombre de plages de valeurs considérées au sens de l'invention et les exemples précédents sont donnés à titre illustratif.

Lorsqu'un filtrage de Sobel est appliqué au bloc de texture décodé en tant que bloc de référence décodé, la valeur maximale du gradient obtenu par un tel filtrage est une indication fiable de la largeur des bordures dans ledit bloc de texture décodé. Si des bordures larges sont détectées, ces bordures sont susceptibles d'être présentes dans l'image de profondeur correspondante, et par conséquent la corrélation entre les meilleurs modes Intra pour le bloc de référence décodé et pour le bloc courant sera élevée, étant donné que les modes Intra sont principalement directionnels. Ainsi, selon certains modes de réalisation particuliers, le mode Intra déterminé pour un héritage direct ou un héritage indirect, peut être le mode Intra qui a été utilisé pour le codage du bloc de référence. Dans le cas où les bordures sont moins bien définies dans le bloc de référence décodé filtré, la corrélation entre le bloc de référence décodé filtré et le bloc courant est considérée comme étant plus faible et un codage par héritage indirect est plus efficace qu'un codage par héritage direct.

La figure 6 illustre un codage par héritage progressif d'un bloc courant d'une première image par rapport à un bloc de référence d'une deuxième image, selon un autre mode de réalisation particulier de l'invention.

Selon cet autre mode de réalisation, la première image 31 représente une vue donnée issue d'un premier dispositif d'acquisition d'image, tel qu'une caméra, et la deuxième image 30 représente une vue adjacente de la vue donnée, issue d'une deuxième caméra.

Un bloc de référence 32 a été précédemment codé à l'aide d'un vecteur de mouvement 34. Afin de coder ou décoder un bloc courant 33 de la première image 31, le bloc de référence 32 est décodé.

Un vecteur de disparité 37 est généré entre les deux vues, afin que la position d'un bloc courant de la première image 31 puisse être déplacée pour correspondre à un bloc décodé de la deuxième image 30 illustrant une scène commune. Ce vecteur de disparité 37 peut être connu à partir des positions respectives des première et deuxième caméras et peut par exemple être déterminé à partir d'images de profondeur correspondant aux deux vues.

Ainsi, le pixel supérieur gauche du bloc de référence 32 décodé correspond à un pixel 35 translaté par le vecteur de disparité 37.

Le bloc courant 33 qui est destiné à être codé par rapport au bloc de référence 32 décodé est donc positionné dans la première image 31 de manière à ce que le pixel supérieur gauche 36 du bloc courant corresponde à une position qui est identique à la position du pixel supérieur gauche 35 du bloc de référence 32 dans la deuxième image 30.

Pour le codage ou le décodage du bloc courant 33, au moins une valeur d'une caractéristique locale du bloc de référence 32 décodé puis filtré est déterminée pour le bloc de référence 32, comme précédemment expliqué.

A nouveau, en fonction de la valeur de caractéristique locale calculée, un ou plusieurs vecteurs de mouvement sont déterminés en tant qu'informations de codage ou de décodage du bloc courant. De façon similaire au mode de réalisation décrit précédemment, chaque plage de valeurs de caractéristique locale peut correspondre à un ou plusieurs vecteurs de mouvement particuliers, parmi lesquels peut figurer, à titre de cas particulier, le vecteur de mouvement 34 ayant servi à coder/décoder le bloc de référence 32. Par exemple, pour une valeur de caractéristique locale comprise entre 1000 et 1500, deux vecteurs de mouvement différents du vecteur de mouvement 34 sont déterminés. Pour une valeur de caractéristique locale comprise entre 1500 et 4000, est déterminé un autre vecteur de mouvement qui est encore différent du vecteur de mouvement 34 et des deux vecteurs de mouvement précités. Pour des valeurs de caractéristique locale supérieures à 4000, encore un autre vecteur de mouvement différent est déterminé. Dans cet exemple, le premier seuil peut être fixé à 4000 et le second seuil peut être fixé à 1000. Cependant, aucune restriction n'est liée au choix des seuils au sens de la présente invention.

Si la valeur de caractéristique locale est supérieure au premier seuil, alors le vecteur de mouvement à utiliser pour le codage ou le décodage du bloc courant est hérité directement du vecteur de mouvement qui a été déterminé dans la plage de valeurs supérieures à 4000. Si la valeur de caractéristique locale est comprise entre le premier seuil et le second seuil, le vecteur de mouvement qui a été déterminé dans la plage de valeurs délimitée par les premier et second seuils, est ajouté à la liste de candidats AMVP pour le bloc courant dans le cadre d'un codage ou décodage MVC.

Les champs de vecteurs de mouvement de deux vues adjacentes sont fortement corrélés, particulièrement au niveau des contours. Ainsi, la valeur maximum du gradient obtenu par filtrage de Sobel (ou tout autre filtrage de détection de contours) du bloc de référence 32 décodé est une bonne estimation de la corrélation existant entre le bloc de référence 32 décodé et le bloc courant 33. Ainsi, en variante ou en complément, le vecteur de mouvement qui a servi à coder/décoder le bloc de référence 32 peut également être utilisé en tant que vecteur de mouvement (information de codage ou de décodage) du bloc courant, dans le cas d'un mode de codage/décodage par héritage direct ou par héritage indirect.

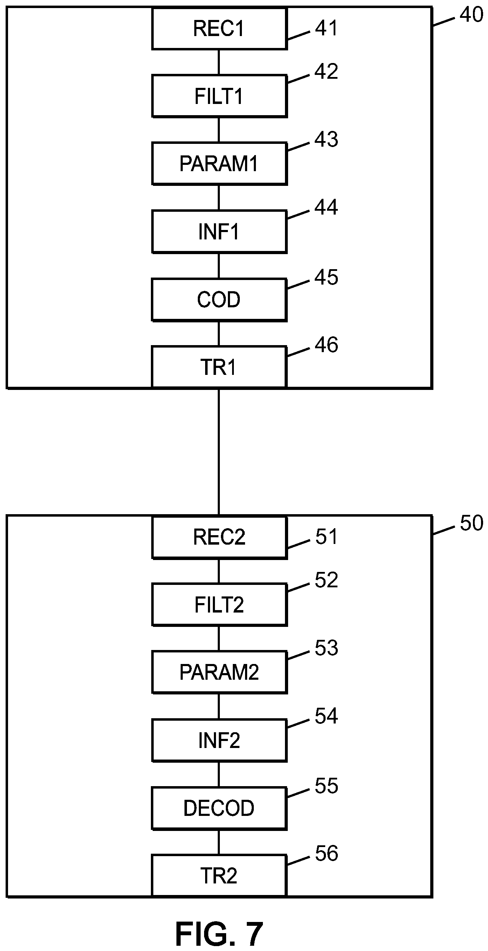

La figure 7 illustre un système comprenant un codeur 40 et un décodeur 50 selon un mode de réalisation particulier de l'invention.

Le codeur 40 comprend une unité de réception 41 apte à recevoir des images issues d'une ou de plusieurs séquences vidéo, pour un codage par blocs de ces images. Ladite unité de réception reçoit ainsi un bloc courant à coder selon l'invention.

Le codeur comprend également une unité 42 de filtrage d'un bloc de référence précédemment codé, puis décodé, lequel est destiné à être utilisé pour coder le bloc courant. L'unité de filtrage 42 est par exemple un filtre de détection de contours tel que mentionné plus haut dans la description.

L'unité de filtrage 42 est apte à transmettre le bloc de référence décodé filtré à une unité d'estimation 43 apte à estimer au moins une valeur d'une caractéristique locale dudit bloc de référence décodé filtré.

A partir de la valeur de caractéristique locale estimée, une unité de détermination 44 est apte à déterminer un ensemble d'informations de codage du bloc courant, ainsi qu'une méthode de codage de ce dernier. Tel que précédemment expliqué, l'unité de détermination 44 détermine ainsi :
- un ensemble d'informations de codage pouvant être un ou plusieurs modes de codage et/ou un ou plusieurs paramètres de codage associés à l'un de ces modes,
- ainsi qu'une méthode de codage parmi une méthode de codage par héritage direct, une méthode de codage par héritage indirect et une méthode de codage classique.

Une unité de codage 45 est apte à coder le bloc courant sur la base de l'ensemble d'informations de codage et de la méthode de codage déterminés.

Une unité de transmission 46 est apte à transmettre le bloc courant codé au décodeur 50. Dans le cas où une méthode de codage par héritage indirect a été employée, les informations de codage optimales déterminées sont en plus transmises au décodeur 50 par l'unité de transmission 46. Aucune restriction n'est attachée aux moyens de communication utilisés entre le codeur 40 et le décodeur 50 selon l'invention.

Le décodeur 50 comprend de façon correspondante une unité de réception 51 apte à recevoir des images codées sous forme de blocs (et éventuellement des informations de codage optimales dans le cas où des blocs ont été codés par une méthode par héritage indirect). L'unité de réception 51 reçoit notamment le bloc courant qui a été codé par le codeur 40.

Le décodeur 50 comprend également une unité 52 de filtrage d'un bloc de référence précédemment codé puis décodé, lequel est destiné à être utilisé pour décoder le bloc courant. Ledit bloc de référence est le même que le bloc de référence utilisé pour le codage du bloc courant. L'unité de filtrage 52 est par exemple un filtre de détection de contours tel que mentionné plus haut dans la description.

L'unité de filtrage 52 est apte à transmettre le bloc de référence décodé filtré à une unité d'estimation 53 qui est apte à estimer au moins une valeur d'une caractéristique locale dudit bloc de référence décodé filtré.

A partir de la valeur de caractéristique locale estimée, une unité de détermination 54 est apte à déduire un ensemble d'informations de décodage du bloc courant ainsi qu'une méthode de décodage du bloc courant. Tel que précédemment expliqué, l'unité de détermination 54 détermine ainsi :
- un ensemble d'informations de décodage pouvant être un ou plusieurs modes de décodage et/ou un ou plusieurs paramètres associés à l'un de ces modes,
- ainsi qu'une méthode de décodage parmi une méthode de décodage par héritage direct, une méthode de décodage par héritage indirect et une méthode de décodage classique.

Une unité de décodage 55 est alors apte à décoder le bloc courant sur la base de l'ensemble d'informations de décodage et de la méthode de décodage déterminés.

Une unité de transmission 56 est apte à transmettre le bloc courant décodé à des dispositifs de traitement du bloc courant décodé, non concernés par l'invention.

Ainsi, la présente invention peut être implémentée dans le cadre des codages/décodages et des standards présentés dans la partie introductive de la présente demande.

Des exemples non limitatifs sont donnés à titre illustratif.

Pour le codage MVC, la valeur maximum de gradient du bloc de référence décodé puis filtré peut être utilisée en tant que valeur de caractéristique locale afin de savoir si un bloc courant doit hériter du vecteur de mouvement du bloc de référence ou si le vecteur de mouvement du bloc de référence doit être ajouté à la liste de candidats AMVP pour prédiction.

Pour le codage 3DVC, la valeur maximum de gradient du bloc de référence de texture décodé puis filtré peut être utilisée en tant que valeur de caractéristique locale afin de savoir si le mode Intra d'une image de profondeur doit hériter du mode Intra de l'image de texture ou si le mode Intra de l'image de texture doit être ajouté à la liste de candidats MPM pour la prédiction du mode Intra de l'image de profondeur.

En variante, pour le codage 3DVC, la valeur maximum de gradient du bloc de référence de texture décodé puis filtré peut être utilisée en tant que valeur de caractéristique locale afin de savoir si une structure de partitionnement d'un bloc de profondeur doit hériter directement de la structure de partitionnement du bloc de texture, sans prévoir toutefois de prédiction. Ainsi, la présente invention peut également être appliquée dans le cas où le second seuil a une valeur nulle. Une seule comparaison est alors effectuée avec le premier seuil afin de déterminer si l'héritage direct doit être mis en oeuvre.

## Revendications

1. Procédé de codage d'un bloc courant (25, 33) d'une première image (21, 31) par rapport à un bloc de référence d'une deuxième image comportant au moins un élément commun avec ladite première image (21, 31), le bloc de référence (24, 32) ayant été au préalable codé puis décodé, **caractérisé en ce que** le procédé comprend les étapes consistant à:
- filtrer (10) le bloc de référence décodé;
- estimer (11), uniquement sur la base du bloc de référence décodé filtré, une valeur d'une caractéristique pixellique du bloc de référence décodé filtré;
- déterminer (12), en fonction de la valeur estimée:
▪ des informations de codage pour coder le bloc courant, les informations de codage déterminées comprenant soit au moins un mode de codage, soit au moins un paramètre de codage associé audit mode de codage, soit les deux,
▪ une méthode de codage du bloc courant, la méthode de codage étant :
• si la valeur estimée est supérieure à un premier seuil prédéterminé, une méthode de codage par héritage direct dans laquelle les informations de codage déterminées sont utilisées telles quelles pour prédire le bloc courant,
• si la valeur estimée est inférieure au premier seuil prédéterminé et supérieure à un deuxième seuil prédéterminé, une méthode de codage par héritage indirect dans laquelle les informations de codage déterminées sont mises en compétition avec des informations de codage prédéterminées, selon un critère de performance de codage, pour sélectionner les informations de codage optimales à utiliser pour prédire le bloc courant,
• sinon, une méthode autre qu'une méthode de codage par héritage ;
- en fonction de la valeur estimée, coder (13) le bloc courant en fonction des informations de codage déterminées et selon la méthode de codage déterminée.

2. Procédé de décodage d'un bloc courant (25, 33) codé d'une première image (21, 31) par rapport à un bloc de référence d'une deuxième image comportant au moins un élément commun avec la première image (21, 31), le bloc de référence (24, 32) ayant été au préalable décodé, **caractérisé en ce que** le procédé comprend les étapes consistant à :
- filtrer (14) le bloc de référence décodé;
- estimer (15), uniquement sur la base du bloc de référence décodé filtré, une valeur d'une caractéristique pixellique du bloc de référence décodé filtré ;
- déterminer (16), en fonction de la valeur estimée:
▪ des informations de décodage pour décoder le bloc courant, les informations de décodage déterminées comprenant soit au moins un mode de décodage, soit au moins un paramètre de décodage associé audit mode de décodage, soit les deux,
▪ une méthode de décodage du bloc courant, la méthode de décodage étant :
• si la valeur estimée est supérieure à un premier seuil prédéterminé, une méthode de décodage par héritage direct dans laquelle les informations de décodage déterminées sont utilisées telles quelles pour prédire le bloc courant,
• si la valeur estimée est inférieure au premier seuil prédéterminé et supérieure à un deuxième seuil prédéterminé, une méthode de décodage par héritage indirect dans laquelle des informations de codage optimales sont lues de façon à sélectionner les informations de décodage correspondantes des informations de décodage déterminées, afin de prédire le bloc courant,
• sinon, une méthode autre qu'une méthode de décodage par héritage ;
- en fonction de la valeur estimée de caractéristique pixellique, décoder (17) le bloc courant en fonction des informations de décodage déterminées et selon ladite méthode de décodage déterminée.

3. Procédé selon l'une des revendications 1 à 2, des images étant initialement acquises par une pluralité de dispositifs d'acquisition d'images, **caractérisé en ce que** chaque image représentant une vue donnée, la première image (21, 31) correspond à une vue adjacente de la deuxième image (20, 30), et **en ce que** le bloc courant (25, 33) et le bloc de référence (24, 32) ont des positions identiques respectivement dans la première image et la deuxième image, lorsque la position du bloc courant est corrigée par un vecteur de disparité entre la vue de la première image et la vue de la deuxième image.

4. Procédé selon l'une des revendications 1 à 2, des images successives étant acquises temporellement par un dispositif d'acquisition d'images, **caractérisé en ce que**, la première image (21, 31) correspond à une image acquise consécutivement à l'acquisition de la deuxième image (20, 30), et **en ce que** le bloc courant (25, 33) et le bloc de référence (24, 32) représentent une scène commune dans les première et deuxième images respectivement.

5. Procédé selon l'une des revendications 1 à 2, des images de texture étant acquises en association avec des images de profondeur, **caractérisé en ce que** la première image (21, 31) est une image de profondeur et la deuxième image (20, 30) est l'image de texture associée à la première image, et **en ce que** le bloc courant (25, 33) et le bloc de référence (24, 32) ont des positions identiques respectivement dans la première image et dans la deuxième image.

6. Programme d'ordinateur comportant des instructions pour la mise en oeuvre du procédé selon l'une quelconque des revendications 1 à 5, lorsque ce programme est exécuté par un processeur.

7. Codeur pour le codage d'un bloc courant (25, 33) d'une première image (21, 31) par rapport à un bloc de référence d'une deuxième image comportant au moins un élément commun avec ladite première image (21, 31), le bloc de référence (24, 32) ayant été au préalable codé puis décodé,
**caractérisé en ce que** le codeur (40) comprend :
- une unité (42) de filtrage du bloc de référence décodé,
- une unité (43) d'estimation d'une valeur d'une caractéristique pixellique du bloc de référence décodé filtré, uniquement sur la base du bloc de référence décodé filtré ;
- une unité (44) de détermination, en fonction de la valeur estimée :
▪ d'informations de codage pour coder le bloc courant, les informations de codage déterminées comprenant soit au moins un mode de codage, soit au moins un paramètre de codage associé audit mode de codage, soit les deux,
▪ d'une méthode de codage du bloc courant la méthode de codage étant :
• si la valeur estimée est supérieure à un premier seuil prédéterminé, une méthode de codage par héritage direct dans laquelle les informations de codage déterminées sont utilisées telles quelles pour prédire le bloc courant,
• si la valeur estimée est inférieure au premier seuil prédéterminé et supérieure à un deuxième seuil prédéterminé, une méthode de codage par héritage indirect dans laquelle les informations de codage déterminées sont mises en compétition avec des informations de codage prédéterminées, selon un critère de performance de codage, pour sélectionner les informations de codage optimales à utiliser pour prédire le bloc courant,
• sinon, une méthode autre qu'une méthode de codage par héritage;
- une unité (45) de codage qui, en fonction de la valeur estimée, code le bloc courant en fonction des informations de codage déterminées et selon la méthode de codage déterminée.

8. Décodeur pour le décodage d'un bloc courant (25, 33) codé d'une première image (21, 31) par rapport à un bloc de référence d'une deuxième image comportant au moins un élément commun avec la première image (21, 31), le bloc de référence (24, 32) ayant été au préalable décodé, **caractérisé en ce que** le décodeur (50) comprend :
- une unité (52) de filtrage du bloc de référence décodé,
- une unité (53) d'estimation d'une valeur d'une caractéristique pixellique du bloc de référence décodé filtré, uniquement sur la base du bloc de référence décodé filtré;
- une unité (54) de détermination, en fonction de la valeur estimée :
▪ dinformations de décodage pour décoder le bloc courant, les informations de décodage comprenant soit au moins un mode de décodage, soit au moins un paramètre de décodage associé audit mode de décodage, soit les deux,
▪ d'une méthode de décodage du bloc courant, la méthode de décodage étant :
• si la valeur estimée est supérieure à un premier seuil prédéterminé, une méthode de décodage par héritage direct dans laquelle les informations de décodage déterminées sont utilisées telles quelles pour prédire le bloc courant,
• si la valeur estimée est inférieure au premier seuil prédéterminé et supérieure à un deuxième seuil prédéterminé, une méthode de décodage par héritage indirect dans laquelle des informations de codage optimales sont lues de façon à sélectionner les informations de décodage correspondantes des informations de décodage déterminées, afin de prédire le bloc courant,
• sinon, une méthode autre qu'une méthode de décodage par héritage ; et
- une unité (55) de décodage qui, en fonction de la valeur estimée, décode le bloc courant en fonction des informations de décodage déterminées et selon la méthode de décodage déterminée.

9. Système comprenant un codeur selon la revendication 7 et un décodeur selon la revendication 8, ledit codeur comprenant en outre une unité de transmission (46) pour transmettre au codeur des blocs codés pour un codage par bloc d'images.

## Patentansprüche

1. Verfahren zur Codierung eines laufenden Blocks (25, 33) eines ersten Bildes (21, 31) in Bezug zu einem Referenzblock eines zweiten Bildes, umfassend mindestens ein gemeinsames Element mit dem ersten Bild (21, 31), wobei der Referenzblock (24, 32) vorher codiert, dann decodiert wurde, **dadurch gekennzeichnet, dass** das Verfahren die folgenden Schritte umfasst, darin bestehend:
- den decodierten Referenzblock zu filtern (10),
- nur auf Basis des gefilterten decodierten Referenzblocks einen Wert eines Pixelmerkmals des gefilterten decodierten Referenzblocks zu schätzen (11),
- in Abhängigkeit von dem Schätzwert zu bestimmen (12) :
▪ Codierungsinformationen zum Codieren des laufenden Blocks, wobei die bestimmten Codierungsinformationen entweder mindestens einen Codierungsmodus oder mindestens einen Codierungsparameter, der dem Codierungsmodus zugeordnet ist, oder beide umfassen,
▪ eine Codierungsmethode des laufenden Blocks, wobei die Codierungsmethode ist:
• wenn der Schätzwert größer als eine erste vorbestimmte Grenze ist, eine Codierungsmethode durch direkte Vererbung, bei der die bestimmten Codierungsinformationen als solche verwendet werden, um den laufenden Block vorherzusagen,
• wenn der Schätzwert kleiner als die erste vorbestimmte Grenze und größer als eine zweite vorbestimmte Grenze ist, eine Codierungsmethode durch indirekte Vererbung, bei der die bestimmten Codierungsinformationen mit den vorbestimmten Codierungsinformationen nach einem Codierungsleistungskriterium in einen Wettstreit gebracht werden, um die optimalen Codierungsinformationen auszuwählen, die für die Vorhersage des laufenden Blocks zu verwenden sind,
• andernfalls eine andere Methode als eine Codierungsmethode durch Vererbung;
- in Abhängigkeit vom Schätzwert den laufenden Block in Abhängigkeit von den bestimmten Codierungsinformationen und nach der bestimmten Codierungsmethode zu codieren (13).

2. Verfahren zur Decodierung eines codierten laufenden Blocks (25, 33) eines ersten Bildes (21, 31) in Bezug zu einem Referenzblock eines zweiten Bildes, umfassend mindestens ein gemeinsames Element mit dem ersten Bild (21, 31), wobei der Referenzblock (24, 32) vorher decodiert wurde, **dadurch gekennzeichnet, dass** das Verfahren die folgenden Schritte umfasst, darin bestehend:
- den decodierten Referenzblock zu filtern (14),
- nur auf Basis des gefilterten decodierten Referenzblocks einen Wert eines Pixelmerkmals des gefilterten decodierten Referenzblocks zu schätzen (15),
- in Abhängigkeit von dem Schätzwert zu bestimmen (16) :
▪ Decodierungsinformationen zum Decodieren des laufenden Blocks, wobei die bestimmten Decodierungsinformationen entweder mindestens einen Decodierungsmodus oder mindestens einen Decodierungsparameter, der dem Decodierungsmodus zugeordnet ist, oder beide umfassen,
▪ eine Decodierungsmethode des laufenden Blocks, wobei die Decodierungsmethode ist:
• wenn der Schätzwert größer als eine erste vorbestimmte Grenze ist, eine Decodierungsmethode durch direkte Vererbung, bei der die bestimmten Decodierungsinformationen als solche verwendet werden, um den laufenden Block vorherzusagen,
• wenn der Schätzwert kleiner als die erste vorbestimmte Grenze und größer als eine zweite vorbestimmte Grenze ist, eine Decodierungsmethode durch indirekte Vererbung, bei der die optimalen Decodierungsinformationen gelesen werden, um die entsprechenden Decodierungsinformationen aus den bestimmten Decodierungsinformationen auszuwählen, um den laufenden Block vorherzusagen,
• andernfalls eine andere Methode als eine Decodierungsmethode durch Vererbung;
- in Abhängigkeit vom Schätzwert eines Pixelmerkmals den laufenden Block in Abhängigkeit von den bestimmten Decodierungsinformationen und nach der bestimmten Decodierungsmethode zu decodieren (17).

3. Verfahren nach einem der Ansprüche 1 bis 2, wobei Bilder ursprünglich durch eine Vielzahl von Bildaufnahmevorrichtungen aufgenommen werden, **dadurch gekennzeichnet, dass** jedes Bild eine gegebene Ansicht darstellt, wobei das erste Bild (21, 31) einer an das zweite Bild (20, 30) angrenzenden Ansicht entspricht, und dass der laufende Block (25, 33) und der Referenzblock (24, 32) identische Positionen im ersten Bild bzw. im zweiten Bild haben, wenn die Position des laufenden Blocks durch einen Divergenzvektor zwischen der Ansicht des ersten Bildes und der Ansicht des zweiten Bildes korrigiert wird.

4. Verfahren nach einem der Ansprüche 1 bis 2, wobei aufeinanderfolgende Bilder zeitlich durch eine Bildaufnahmevorrichtung aufgenommen werden, **dadurch gekennzeichnet, dass** das erste Bild (21, 31) einem nach der Aufnahme des zweiten Bildes (20, 30) aufgenommenen Bild entspricht, und dass der laufende Block (25, 33) und der Referenzblock (24, 32) eine gemeinsame Szene in dem ersten bzw. zweiten Bild darstellen.

5. Verfahren nach einem der Ansprüche 1 bis 2, wobei Texturbilder in Verbindung mit Tiefenbildern aufgenommen werden, **dadurch gekennzeichnet, dass** das erste Bild (21, 31) ein Tiefenbild ist, und dass das zweite Bild (20, 30) das mit dem ersten Bild verbundene Texturbild ist, und dass der laufende Block (25, 33) und der Referenzblock (24, 32) identische Positionen in dem ersten Bild bzw. in dem zweiten Bild haben.

6. Computerprogramm, umfassend Anweisungen für den Einsatz des Verfahrens nach einem der Ansprüche 1 bis 5, wenn dieses Programm von einem Prozessor ausgeführt wird.

7. Codierer zur Codierung eines laufenden Blocks (25, 33) eines ersten Bildes (21, 31) in Bezug zu einem Referenzblock eines zweiten Bildes, umfassend mindestens ein gemeinsames Element mit dem ersten Bild (21, 31), wobei der Referenzblock (24, 32) vorher codiert, dann decodiert wurde,
**dadurch gekennzeichnet, dass** der Codierer (40) umfasst:
- eine Einheit (42), um den decodierten Referenzblock zu filtern,
- eine Einheit (43), um nur auf Basis des gefilterten decodierten Referenzblocks einen Wert eines Pixelmerkmals des gefilterten decodierten Referenzblocks zu schätzen,
- eine Einheit (44), um in Abhängigkeit von dem Schätzwert zu bestimmen:
▪ Codierungsinformationen zum Codieren des laufenden Blocks, wobei die bestimmten Codierungsinformationen entweder mindestens einen Codierungsmodus oder mindestens einen Codierungsparameter, der dem Codierungsmodus zugeordnet ist, oder beide umfassen,
▪ eine Codierungsmethode des laufenden Blocks, wobei die Codierungsmethode ist:
• wenn der Schätzwert größer als eine erste vorbestimmte Grenze ist, eine Codierungsmethode durch direkte Vererbung, bei der die bestimmten Codierungsinformationen als solche verwendet werden, um den laufenden Block vorherzusagen,
• wenn der Schätzwert kleiner als die erste vorbestimmte Grenze und größer als eine zweite vorbestimmte Grenze ist, eine Codierungsmethode durch indirekte Vererbung, bei der die bestimmten Codierungsinformationen mit den vorbestimmten Codierungsinformationen nach einem Codierungsleistungskriterium in einen Wettstreit gebracht werden, um die optimalen Codierungsinformationen auszuwählen, die für die Vorhersage des laufenden Blocks zu verwenden sind,
• andernfalls eine andere Methode als eine Codierungsmethode durch Vererbung;
- eine Einheit (45), um in Abhängigkeit vom Schätzwert den laufenden Block in Abhängigkeit von den bestimmten Codierungsinformationen und nach der bestimmten Codierungsmethode zu codieren.

8. Decodierer zur Decodierung eines codierten laufenden Blocks (25, 33) eines ersten Bildes (21, 31) in Bezug zu einem Referenzblock eines zweiten Bildes, umfassend mindestens ein gemeinsames Element mit dem ersten Bild (21, 31), wobei der Referenzblock (24, 32) vorher decodiert wurde, **dadurch gekennzeichnet, dass** der Decodierer (50) umfasst:
- eine Einheit (52), um den decodierten Referenzblock zu filtern,
- eine Einheit (53), um nur auf Basis des gefilterten decodierten Referenzblocks einen Wert eines Pixelmerkmals des gefilterten decodierten Referenzblocks zu schätzen,
- eine Einheit (54), um in Abhängigkeit von dem Schätzwert zu bestimmen:
▪ Decodierungsinformationen zum Decodieren des laufenden Blocks, wobei die bestimmten Decodierungsinformationen entweder mindestens einen Decodierungsmodus oder mindestens einen Decodierungsparameter, der dem Decodierungsmodus zugeordnet ist, oder beide umfassen,
▪ eine Decodierungsmethode des laufenden Blocks, wobei die Decodierungsmethode ist:
• wenn der Schätzwert größer als eine erste vorbestimmte Grenze ist, eine Decodierungsmethode durch direkte Vererbung, bei der die bestimmten Decodierungsinformationen als solche verwendet werden, um den laufenden Block vorherzusagen,
• wenn der Schätzwert kleiner als die erste vorbestimmte Grenze und größer als eine zweite vorbestimmte Grenze ist, eine Decodierungsmethode durch indirekte Vererbung, bei der die optimalen Decodierungsinformationen gelesen werden, um die entsprechenden Decodierungsinformationen aus den bestimmten Decodierungsinformationen auszuwählen, um den laufenden Block vorherzusagen,
• andernfalls eine andere Methode als eine Decodierungsmethode durch Vererbung; und
- eine Einheit (55), um in Abhängigkeit vom Schätzwert den laufenden Block in Abhängigkeit von den bestimmten Decodierungsinformationen und nach der bestimmten Decodierungsmethode zu decodieren.

9. System, umfassend einen Codierer nach Anspruch 7 und einen Decodierer nach Anspruch 8, wobei der Codierer ferner eine Übertragungseinheit (46) umfasst, um an den Codierer codierte Blöcke für eine Codierung pro Bildblock zu übertragen.

## Claims

1. Method for encoding a current block (25, 33) of a first image (21, 31) relative to a reference block of a second image having at least one element in common with said first image (21, 31), the reference block (24, 32) having been previously encoded and then decoded, **characterized in that** the method comprises the steps of:
- filtering (10) the decoded reference block;
- estimating (11), solely on the basis of the filtered decoded reference block, a value of a pixel characteristic of the filtered decoded reference block;
- determining (12), on the basis of the estimated value:
• encoding information for encoding the current block, the determined encoding information comprising either at least one encoding mode, or at least one encoding parameter associated with said encoding mode, or both of these,
• a method of encoding the current block, the encoding method being:
• if the estimated value is above a first predetermined threshold, a direct inheritance encoding method, in which the determined encoding information is used in its existing state to predict the current block,
• if the estimated value is below the first predetermined threshold and above a second predetermined threshold, an indirect inheritance encoding method, in which the determined encoding information is made to compete with predetermined encoding information, according to an encoding performance criterion, in order to select the optimal encoding information to be used for predicting the current block,
• otherwise, a method other than an inheritance encoding method;
- on the basis of the estimated value, encoding (13) the current block on the basis of the determined encoding information and according to the determined encoding method.

2. Method for decoding an encoded current block (25, 33) of a first image (21, 31) relative to a reference block of a second image having at least one element in common with the first image (21, 31), the reference block (24, 32) having been previously decoded, **characterized in that** the method comprises the steps of:
- filtering (14) the decoded reference block;
- estimating (15), solely on the basis of the filtered decoded reference block, a value of a pixel characteristic of the filtered decoded reference block;
- determining (16), on the basis of the estimated value:
• decoding information for decoding the current block, the determined decoding information comprising either at least one decoding mode, or at least one decoding parameter associated with said decoding mode, or both of these,
• a method of decoding the current block, the decoding method being:
• if the estimated value is above a first predetermined threshold, a direct inheritance decoding method, in which the determined decoding information is used in its existing state to predict the current block,
• if the estimated value is below the first predetermined threshold and above a second predetermined threshold, an indirect inheritance decoding method, in which optimal encoding information is read in such a way as to select the corresponding decoding information from the determined decoding information, in order to predict the current block,
• otherwise, a method other than an inheritance decoding method;
- on the basis of the estimated pixel characteristic value, decoding (17) the current block on the basis of the determined decoding information and according to said determined decoding method.

3. Method according to one of Claims 1 and 2, images being initially acquired by a plurality of image acquisition devices, **characterized in that**, each image representing a given view, the first image (21, 31) corresponds to an adjacent view of the second image (20, 30), and **in that** the current block (25, 33) and the reference block (24, 32) have identical positions in the first image and the second image respectively, when the position of the current block is corrected by a vector of disparity between the view of the first image and the view of the second image.

4. Method according to one of Claims 1 and 2, successive images being acquired temporally by an image acquisition device, **characterized in that** the first image (21, 31) corresponds to an image acquired following the acquisition of the second image (20, 30), and **in that** the current block (25, 33) and the reference block (24, 32) represent a common scene in the first and second images respectively.

5. Method according to one of Claims 1 and 2, texture images being acquired in association with depth images, **characterized in that** the first image (21, 31) is a depth image and the second image (20, 30) is the texture image associated with the first image, and **in that** the current block (25, 33) and the reference block (24, 32) have identical positions in the first image and in the second image respectively.

6. Computer program including instructions for implementing the method according to any of Claims 1 to 5 when the program is executed by a processor.

7. Encoder for encoding a current block (25, 33) of a first image (21, 31) relative to a reference block of a second image having at least one element in common with said first image (21, 31), the reference block (24, 32) having been previously encoded and then decoded, **characterized in that** the encoder (40) comprises:
- a unit (42) for filtering the decoded reference block,
- a unit (43) for estimating a value of a pixel characteristic of the filtered decoded reference block, solely on the basis of the filtered decoded reference block;
- a unit (44) for determining, on the basis of the estimated value:
• encoding information for encoding the current block, the determined encoding information comprising either at least one encoding mode, or at least one encoding parameter associated with said encoding mode, or both of these,
• a method of encoding the current block, the encoding method being:
• if the estimated value is above a first predetermined threshold, a direct inheritance encoding method, in which the determined encoding information is used in its existing state to predict the current block,
• if the estimated value is below the first predetermined threshold and above a second predetermined threshold, an indirect inheritance encoding method, in which the determined encoding information is made to compete with predetermined encoding information, according to an encoding performance criterion, in order to select the optimal encoding information to be used for predicting the current block,
• otherwise, a method other than an inheritance encoding method;
- an encoding unit (45) which, on the basis of the estimated value, encodes the current block on the basis of the determined encoding information and according to the determined encoding method.

8. Decoder for decoding an encoded current block (25, 33) of a first image (21, 31) relative to a reference block of a second image having at least one element in common with the first image (21, 31), the reference block (24, 32) having been previously decoded, **characterized in that** the decoder (50) comprises:
- a unit (52) for filtering the decoded reference block,
- a unit (53) for estimating a value of a pixel characteristic of the filtered decoded reference block, solely on the basis of the filtered decoded reference block;
- a unit (54) for determining, on the basis of the estimated value:
• decoding information for decoding the current block, the decoding information comprising either at least one decoding mode, or at least one decoding parameter associated with said decoding mode, or both of these,
• a method of decoding the current block, the decoding method being:
• if the estimated value is above a first predetermined threshold, a direct inheritance decoding method, in which the determined decoding information is used in its existing state to predict the current block,
• if the estimated value is below the first predetermined threshold and above a second predetermined threshold, an indirect inheritance decoding method, in which optimal encoding information is read in such a way as to select the corresponding decoding information from the determined decoding information, in order to predict the current block,
• otherwise, a method other than an inheritance decoding method; and
- a decoding unit (55) which, on the basis of the estimated value, decodes the current block on the basis of the determined decoding information and according to the determined decoding method.

9. System comprising an encoder according to Claim 7 and a decoder according to Claim 8, said encoder further comprising a transmission unit (46) for transmitting encoded blocks to the encoder for image block encoding.
